# EUROPEAN PATENT SPECIFICATION

(11) **EP 0 980 982 B1**
(45) Date of publication and mention of the grant of the patent: **30.11.2005**
(21) Application number: 99850124.1
(22) Date of filing: 18.08.1999
(51) Int. Cl.: F15B 15/08, F16J 15/32

(54) **Sealing device**
Dichtungseinrichtung
Système d'étanchéité

(30) Priority: 19.08.1998 SE 9802774
(43) Date of publication of application: 23.02.2000
(73) Proprietor: AB REXROTH MECMAN, S-125 81 Stockholm (SE)
(72) Inventor: Johansson, Kenneth, 12156 Johanneshov (SE)
(74) Representative: Janson, Ronny

(56) References cited:
- EP-A- 0 112 959
- DE-A- 3 016 231
- DE-A- 3 823 261
- DE-A- 19 522 580
- DE-C- 4 124 531

## Description

This invention concerns a device according to the preamble of claim 1.

Such devices are previously well known and may be exemplified with respect to a rod-less slot cylinder, wherein, which is known, the cylinder comprises two working spaces, which are separated by an axially displaceable piston, which is sealed against the cylinder, and which in each outer region comprises a sealing seat and a sealing ring positioned therein. The space between the sealing rings is in connection with the atmosphere over the slot in the cylinder wall and is therefore not pressurized. This means that a relatively large pressure difference may exist over the sealing rings when the cylinder is in operation.

Particularly with respect to pneumatic cylinders of this kind, wherein the cylinder room comprises an oblong cross section having linear circumference sections, situations have frequently occurred, where the seal has been insufficient, which has resulted in leakage over the sealing ring and in some cases an unwanted movement of the piston, resulting from this leakage. The latter with respect to a particular pneumatic connection of the cylinder. Anyway, the result of the uncertain seal is that there is sometimes a leakage and sometimes not.

DE-A1-1 952 280 describes a device for a pneumatic cylinder wherein groover are provided at the outside of a sealing ring in order to relieve possible pressure build-up between two identical sealing rings.

It is an aim of this invention to provide a device wherein the said problem is eliminated or at least considerably reduced.

This aim is obtained in devices of the above mentioned kind through the features of the characterising portion of claim 1.

This way it is ensured that the space limited by the inner sealing lip, the second abutment surface, the inner portion of the first abutment surface and the inner surface of the sealing ring is vented to the atmosphere, which in turn ensures that the trace of a sealing effect, which has been observed and which has sometimes occurred between the rear surface of the sealing ring, which lies against the first abutment surface ceases tending to provide sealing co-operate with this first abutment surface. This way, it is instead ensured that the pressure prevailing inside the working space of the cylinder reliably provides sealing connection between the inner sealing lip and the second abutment surface of the seat. In contrast to the prior art, the invention thus provides safe sealing co-operation between the parts intended for sealing, which gives a reliable and defined seal as a contrast to the prior art, where instead portions of the sealing ring and the seat respectively, which are not adapted for sealing provide an (insufficient) sealing function, thus resulting in an unreliable and undefined seal with periods of leakage over the seal.

Further advantages of the invention are obtained through the features in the dependent claims.

The invention will now be described with reference to the annexed drawings, wherein:
Fig. 1 shows a piston end portion having a sealing ring according to the invention,
Fig. 2 shows the piston end portion of Fig. 3 without the sealing ring,
Fig. 3 shows the sealing ring in Fig. 1, and
Fig. 4 shows a section through the sealing ring of Fig. 1 according to the invention with indicated seat planes.

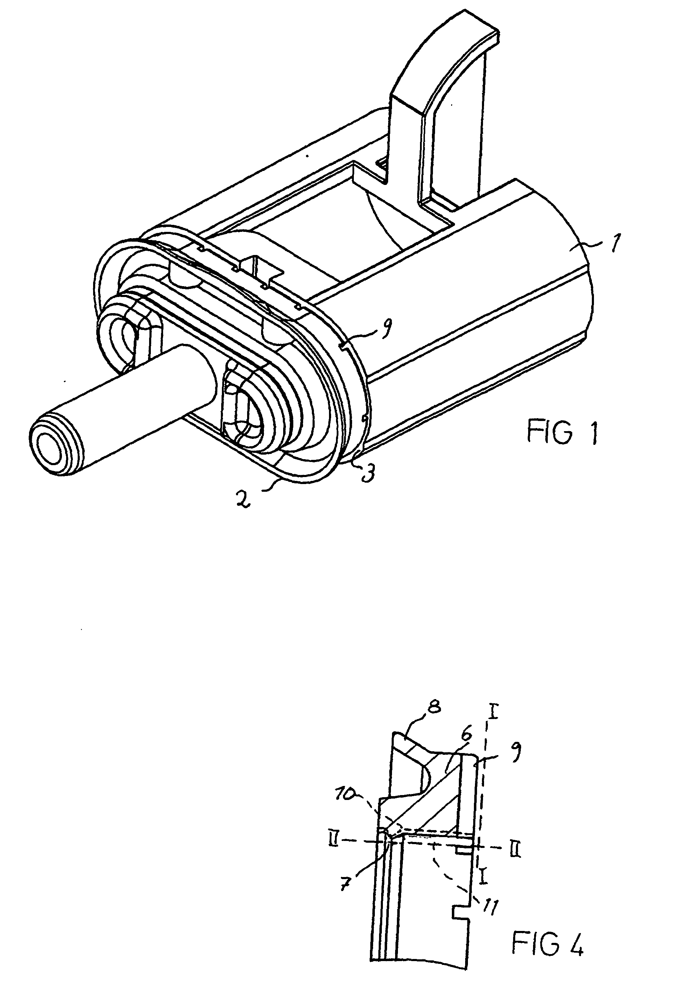

The piston end portion 1 in Fig. 1 is intended to be fastened to a piston body of a slot cylinder and provides an oblong cross section with linear portions and semicircular portions giving a compact flat appearance to the piston. In the left part of the piston end portion, as seen in the Figure, a sealing ring 2 is applied in a ring seat 3, which is intended for that purpose.

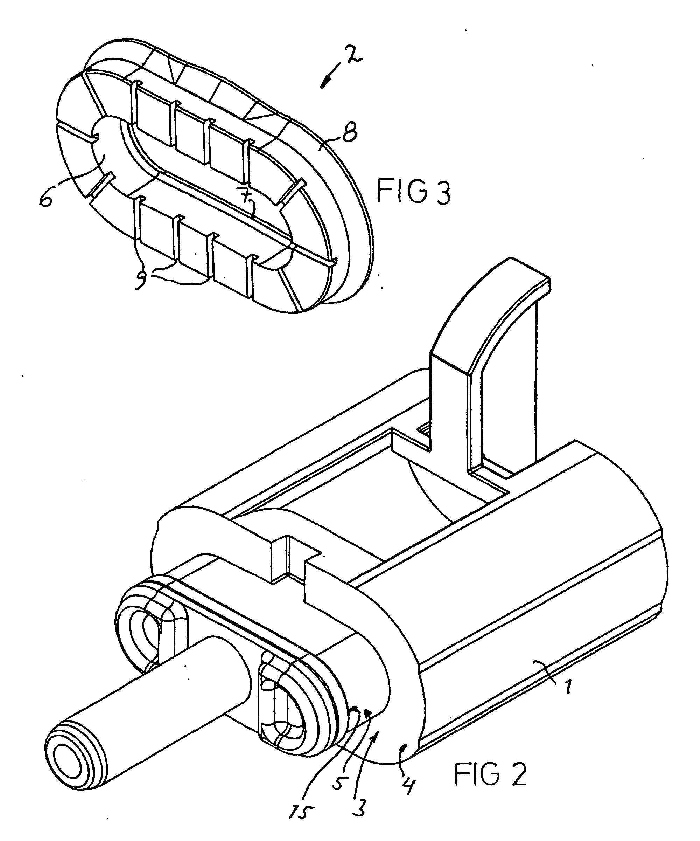

The ring seat is seen clearer on Fig. 2, wherein 4 indicates an essentially radially extending first abutment surface for the piston seal ring and 5 a second, essentially axially extending abutment surface for the sealing ring. Moreover the piston seat 3 provides an outer, third abutment surface 15 for holding the sealing ring in the seat.

The sealing ring 2 in Fig. 3 comprises a body 6 and an outer sealing ring 8, for lying against the cylinder wall and an inner sealing lip 7 for lying against the second abutment surface (5 in Fig. 2) of the seat of the piston. Further, the sealing ring, at the rear of the body, comprises venting grooves 9, which are distributed around the circumference of the sealing ring in a radial, or, as seen in the Figure, vertical plane, which grooves are intended to vent a space which is limited by the first and second abutment surfaces of the seat, the inner surface of the body and the inner sealing lip of the sealing ring (see Fig. 4).

The invention will be more clear in detail from Fig. 4, wherein I-I indicates the extension of the first abutment surface 4 of the seat of the piston, and II-II indicates the extension of the second abutment surface 5 of the seat in this region of the sealing ring. The space intended to be vented according to the above is indicated with number 11. Number 10 on the Figure also indicates the extension of a corresponding inner surface of a sealing ring according to the prior art in a position of the middle area of the linear portion of the sealing ring, when the sealing ring is effected by a certain pressure inside the working space, and when the rear region of the sealing ring has come to some kind of sealing co-operation with the first abutment surface of the seat. In this position the seal is thus pressed with the inner sealing lip from its intended co-operation with the second abutment surface of the seat. It should again be stressed that the curve indicated with 10 is not the appearance of the sealing ring according to the invention, but instead of a sealing ring according to older art. Hereby it should be clear that lack of a venting connection between the space 11, the sealing ring, and in particularly the inner sealing lip 7 tends to lift it from its co-operation with the second abutment surface so that instead an (unreliable and undefined) seal will occur at the abutment of the sealing ring against the first abutment surface and thereby periodic leakage over the seal. By providing a venting connection 9 from the space 11, the sealing function of the sealing lip 7 is instead enhanced, so that a reliable and defined seal is obtained in this position.

The invention may be modified within the scope of the following claims and as an example venting connection may be provided in other ways, for example as closed channels in the sealing ring or as grooves or closed channels in the piston portion carrying the piston ring. In the latter case, the sealing ring thus may be totally without grooves 9 or the like.

Other embodiment of the venting connection may in certain applications open directly behind the inner sealing lip and thereby for example also extend so as to be provided on the outward side, the envelope surface of the body.

The invention is particularly useful and valuable for seals for rod-less slot cylinders, since there may exist an essential pressure fall over the respective seals, and in particularly for cylinder cross sections having linear portions or portions with e.g. large radius, that is where the mechanical application force between the sealing ring and the seat is low.

Also if thus the mentioned application is the central one it is not excluded that the invention is useful also in slot cylinders having a completely circular cross section as well as in piston rod cylinders, even if therein the problems which this invention intends to solve are less important.

## Claims

1. Device for a pneumatic cylinder, comprising an axially moveable piston adapted to move sealingly, wherein the piston provides a ring shaped seat (3), which comprises an essentially radially extending first abutment surface (4) and an essentially axially extending second abutment surface (5) for abutment against a sealing ring (2), which is placed in the seat (3), and which comprises a ring shaped body (6) and an outer sealing lip (8) at a front region of the sealing ring, as seen axially, for lying against the cylinder wall and an inner sealing lip (7) for lying against the second abutment surface of the seat, wherein a rear region of the sealing ring, opposite to said front region of the sealing ring, co-operate with said first abutment surface,
**characterized in that** an essentially radially extending ventilating connection (9) is provided for ventilating a space (11), which is limited by the inner sealing lip (7), the radial inside of the sealing ring (2), the second abutment surface and the radially innermost region of the first abutment surface.

2. Device according to claim 1, **characterized in that** the ventilating connection is comprised of grooves or channels (9) in the sealing ring.

3. Device according to claim 1, **characterized in that** the ventilating connection is comprised of grooves or channels (9) in or in connection with the seat (3).

4. Device according to any of the previous claims, **characterized in that** the sealing ring (2) comprises linear portions along its extension.

5. Device according to any of the previous claims, **characterized in that** the ventilating connection starts from an area adjacent to the position of the inner sealing lip (7).

## Patentansprüche

1. Vorrichtung für einen pneumatischen Zylinder umfassend einen axial bewegbaren Kolben, welcher ausgebildet ist, sich dichtend zu bewegen, wobei der Kolben einen ringförmigen Sitz (3) aufweist, welcher einen sich im Wesentlichen radial erstreckende erste Angrenzungsoberfläche (4) und eine sich im Wesentlichen axial erstreckende zweite Angrenzungsoberfläche (5) aufweist, zum Angrenzen gegen einen Dichtungsring (2), welcher in dem Sitz (3) angeordnet ist, und welcher einen ringförmigen Körper (6) und eine äußere Dichtlippe (8) in einem vorderen Bereich des Dichtungsrings umfasst, in axialer Richtung betrachtet, zum Anlegen gegen die Zylinderwandung und eine innere Dichtlippe (7) zum Anlegen gegen die zweite Angrenzungsoberfläche des Sitzes, wobei ein hinterer Bereich des Dichtringes gegenüberliegend zu dem ersten Bereich des Dichtringes mit der ersten Angrenzungsoberfläche zusammenwirkt,
**dadurch gekennzeichnet, dass** eine sich im Wesentlichen radial erstreckende Lüftungsverbindung (9) zum Belüften eines Raums (11) vorgesehen ist, welche begrenzt ist durch die innere Dichtlippe (7), die radiale Innenseite des Dichtringes (2), die zweite Angrenzungsoberfläche und den radial innersten Bereich der ersten Angrenzungsoberfläche.

2. Vorrichtung gemäß Anspruch 1,
**dadurch gekennzeichnet, dass** die Lüftungsverbindung Ausnehmungen oder Kanäle (9) in dem Dichtring umfasst.

3. Vorrichtung gemäß Anspruch 1,
**dadurch gekennzeichnet, dass** die Lüftungsverbindung Ausnehmungen oder Kanäle (9) in oder in Verbindung mit dem Sitz (3) umfasst.

4. Vorrichtung gemäß einem der vorherigen Ansprüche,
**dadurch gekennzeichnet, dass** der Dichtring (2) lineare Bereiche entlang seiner Erstreckung umfasst.

5. Vorrichtung gemäß einem der vorherigen Ansprüche,
**dadurch gekennzeichnet, dass** die Lüftungsverbindung in einem zu der Position der inneren Dichtungslippe (7) benachbarten Bereich beginnt.

## Revendications

1. Dispositif pour un cylindre pneumatique, comprenant un piston pouvant se déplacer axialement apte à se déplacer de manière étanche, dans lequel le piston fournit un logement en forme d'anneau (3), qui comprend une première surface (4) de butée s'étendant essentiellement radialement ; et une seconde surface (5) de butée s'étendant essentiellement axialement prévue pour venir en butée contre une bague (2) d'étanchéité, qui est placée dans le logement (3), et qui comprend un corps en forme de bague (6) et une lèvre extérieure (8) d'étanchéité au niveau d'une région avant de la bague d'étanchéité, en vue axiale, prévue pour se trouver contre la paroi de cylindre et une lèvre intérieure (7) d'étanchéité prévue pour se trouver contre la seconde surface de butée du logement, dans lequel une région arrière de la bague d'étanchéité, opposée à ladite région avant de la bague d'étanchéité, coopère avec ladite première surface de butée,
**caractérisé en ce qu'**une liaison (9) de ventilation s'étendant essentiellement radialement est prévue pour ventiler un espace (11), qui est limité par la lèvre intérieure (7) d'étanchéité, la partie intérieure radiale de la bague (2) d'étanchéité, la seconde surface de butée et la région radialement le plus à l'intérieur de la première surface de butée.

2. Dispositif selon la revendication 1, **caractérisé en ce que** la liaison de ventilation est constituée de rainures, ou canaux, (9) réalisés dans la bague d'étanchéité.

3. Dispositif selon la revendication 1, **caractérisé en ce que** la liaison de ventilation est constituée de rainures, ou canaux, (9) réalisés dans le logement (3) ou en liaison avec celui-ci.

4. Dispositif selon l'une quelconque des revendications précédentes, **caractérisé en ce que** la bague (2) d'étanchéité comprend des parties rectilignes le long de son pourtour.

5. Dispositif selon l'une quelconque des revendications précédentes, **caractérisé en ce que** la liaison de ventilation commence à partir d'une zone adjacente à la position de la lèvre intérieure (7) d'étanchéité.
